# FASCICULE DE BREVET EUROPEEN

(11) **EP 2 802 701 B1**
(45) Date de publication et mention de la délivrance du brevet: **16.11.2016**
(21) Numéro de dépôt: 13701834.7
(22) Date de dépôt: 07.01.2013
(51) Int. Cl.: D03D 25/00, B29C 70/24, F01D 5/28

(54) **PRÉFORME FIBREUSE D'UNE AUBE DE TURBOMACHINE EN MATÉRIAU COMPOSITE À PLATE-FORME INTEGRÉE, ET SON PROCÉDÉ DE RÉALISATION**
FASERVORFORM FÜR EINE TURBOMASCHINENSCHAUFEL AUS VERBUNDMATERIAL MIT INTEGRIERTER PLATTFORM UND HERSTELLUNGSVERFAHREN DAFÜR
FIBROUS PREFORM OF A TURBOMACHINE BLADE MADE OF COMPOSITE MATERIAL WITH IN-BUILT PLATFORM, AND METHOD OF PRODUCING SAME

(30) Priorité: 09.01.2012 US 201261584406 P
(43) Date de publication de la demande: 19.11.2014
(73) Titulaire: Snecma, 75015 Paris (FR)
(72) Inventeur: MARCHAL, Yann, Portsmouth, NH 03801 (US); COUPE, Dominique, Medford, MA 02155 (US); MAHIEU, Jean-Noël, 94250 Gentilly (FR); DAMBRINE, Bruno, Jacques, Gérard, 77820 Le Châtelet-en-Brie (FR)
(74) Mandataire: Boura, Olivier
(86) Numéro de dépôt international: PCT/FR2013/050026
(87) Numéro de publication internationale: WO 2013/104852

(56) Documents cités:
- FR-A1- 2 943 942
- FR-A1- 2 953 885

## Description

### Arrière-plan de l'invention

La présente invention concerne la réalisation d'une préforme fibreuse d'aube munie d'au moins une plate-forme, notamment pour la fabrication d'une aube de turbomachine en matériau composite.

La réalisation d'aubes en matériau composite pour des turbomachines a déjà été proposé. On pourra se référer par exemple au document EP 1,526,285 qui décrit la fabrication d'une aube de soufflante par réalisation d'une préforme fibreuse par tissage tridimensionnel et densification de la préforme par une matrice organique.

Par ailleurs, une soufflante de turbomachine comprend des plates-formes qui sont disposées entre les aubes afin de délimiter, du côté intérieur, la veine annulaire d'entrée d'air dans la soufflante, cette veine étant délimitée du côté extérieur par un carter. Ces plates-formes peuvent être rapportées séparément ou être intégrées directement à la base des aubes de soufflante, entre l'échasse prolongeant leur pied et la pale de celles-ci. L'invention s'intéresse plus particulièrement aux aubes appartenant à cette seconde catégorie, c'est-à-dire à plate(s)-forme(s) intégrée(s).

Un structure fibreuse selon le préambule de la revendication 1 et un procédé selon le préambule de la revendication 11 sont connu du document FR 2 953 885 A1

### . Objet et résumé de l'invention

Il est donc souhaitable de pouvoir disposer d'aubes de turbomachine à plate(s)-forme(s) intégrée(s) en matériau composite, notamment mais non exclusivement en matériau composite à matrice organique (CMO).

A cet effet, selon l'invention, il est proposé un procédé de réalisation d'une préforme fibreuse pour la fabrication d'une aube de turbomachine en matériau composite, l'aube ayant une pale s'étendant selon une direction longitudinale et présentant deux faces latérales opposées et au moins une plate-forme s'étendant à partir d'une face latérale, le procédé comprenant :
la réalisation par tissage tridimensionnel d'une ébauche fibreuse en une seule pièce avec une pluralité de couches de fils longitudinaux s'étendant dans une direction correspondant à la direction longitudinale de l'aube à fabriquer et liées entre elles par des fils d'une pluralité de couches de fils transversaux ; et
la mise en forme de l'ébauche fibreuse pour obtenir une préforme fibreuse en une seule pièce ayant une première partie formant préforme de pale et au moins une seconde partie formant préforme de plate-forme ;
au cours du tissage de l'ébauche fibreuse, des fils d'un premier groupe de fils longitudinaux sont sortis de l'ébauche fibreuse du côté de l'une au moins des faces latérales de l'ébauche fibreuse pour former une partie de l'ébauche correspondant à une préforme de plate-forme d'aube, et des fils d'un deuxième groupe de fils longitudinaux sont insérés dans l'ébauche fibreuse avec un croisement mutuel entre les fils du premier groupe et les fils du deuxième groupe.

En réalisant au cours du tissage un croisement entre des fils sortis de l'ébauche fibreuse et des fils insérés dans celle-ci, il est possible d'obtenir une préforme fibreuse en une seule pièce par tissage tridimensionnel avec une partie formant préforme de pale et une autre partie formant la préforme de plate-forme tout en maintenant un taux de fibres constant dans l'ébauche fibreuse malgré la sortie des fils du premier groupe.

On assure également une continuité des fibres entre la partie de la préforme formant pale et la partie formant plate-forme, ce qui permet de conférer les propriétés mécaniques requises pour une aube à plate-forme intégrée.

Selon une particularité du procédé, le croisement entre les fils du premier groupe et les fils du deuxième groupe est effectué à proximité d'un raccordement entre la partie de l'ébauche correspondant à la préforme de plate-forme d'aube et la partie de l'ébauche correspondant à la préforme de pale.

De préférence, les fils du deuxième groupe de fils qui sont insérés dans l'ébauche fibreuse proviennent de couches de fils longitudinaux préalablement sorties de l'ébauche fibreuse afin d'obtenir une réduction de l'épaisseur de l'ébauche sur sa largeur. Des couches de fils peuvent en effet être sorties de l'ébauche pour tenir compte de la réduction de l'épaisseur du profil de la pale (depuis le pied vers le sommet de l'aube). Leur utilisation pour réaliser la plate-forme est donc particulièrement avantageuse puisqu'elle évite leur gaspillage.

Dans ce cas, la mise en forme de l'ébauche fibreuse comprend avantageusement la découpe de la portion des fils du deuxième groupe de fils située entre les zones de sortie et d'insertion dans l'ébauche fibreuse. De plus, certains au moins des fils du deuxième groupe de fils peuvent être sortis de l'ébauche fibreuse en aval de leur zone d'insertion dans ladite ébauche fibreuse afin d'obtenir une réduction de l'épaisseur de l'ébauche sur sa largeur en aval de la partie de l'ébauche correspondant à la préforme de plate-forme d'aube.

Lorsque le profil de la pale de l'aube ne présente pas de réduction de son épaisseur entre le pied et le sommet de l'aube, ou lorsque cette réduction d'épaisseur ne permet de disposer d'une quantité suffisante de fils pour former la plate-forme de l'aube, certains au moins des fils du deuxième groupe de fils qui sont insérés dans l'ébauche fibreuse peuvent provenir de couches de fils longitudinaux rapportées.

Selon une autre particularité du procédé, la sortie et l'insertion de fils dans l'ébauche fibreuse est réalisée pour chacune des faces latérales de l'ébauche fibreuse pour former une partie de l'ébauche correspondant à deux préformes de plate-forme d'aube. Dans ce cas, l'aube qui sera fabriquée présentera deux plates-formes de chaque côté (intrados et extrados).

Selon encore une autre particularité du procédé, la mise en forme de l'ébauche fibreuse comprend la découpe de la partie de l'ébauche correspondant à la préforme de plate-forme d'aube aux dimensions voulues et le déploiement de cette partie de l'ébauche selon une direction sensiblement orthogonale à sa face latérale.

Les fils longitudinaux s'étendant dans une direction correspondant à la direction longitudinale de l'aube à fabriquer peuvent être des fils de chaîne. Alternativement, les fils longitudinaux s'étendant dans une direction correspondant à la direction longitudinale de l'aube à fabriquer peuvent être des fils de trame.

L'invention a également pour objet une préforme fibreuse d'une aube de turbomachine ayant une pale s'étendant selon une direction longitudinale et présentant deux faces latérales opposées et au moins une plate-forme s'étendant à partir d'une face latérale, la préforme comprenant une ébauche fibreuse tissée en une seule pièce par tissage tridimensionnel avec une pluralité de couches de fils longitudinaux s'étendant dans une direction correspondant à la direction longitudinale de l'aube à fabriquer et liées entre elles par des fils d'une pluralité de couches de fils transversaux, et dans laquelle, conformément à l'invention, des fils d'un premier groupe de fils longitudinaux sont sortis de l'ébauche fibreuse du côté de l'une au moins des faces latérales de l'ébauche fibreuse pour former une partie de l'ébauche correspondant à une préforme de plate-forme d'aube, et des fils d'un deuxième groupe de fils longitudinaux sont insérés dans l'ébauche fibreuse avec un croisement mutuel entre les fils du premier groupe et les fils du deuxième groupe.

L'invention a aussi pour objet une aube de soufflante de turbomachine en matériau composite comprenant une préforme fibreuse telle que définie précédemment et densifiée par une matrice. L'invention a encore pour objet une soufflante de turbomachine comprenant au moins une telle aube.

### Brève description des dessins

D'autres caractéristiques et avantages de la présente invention ressortiront de la description faite ci-dessous, en référence aux dessins annexés qui en illustrent des exemples de réalisation dépourvus de tout caractère limitatif. Sur les figures :
- la figure 1 est une vue en perspective d'une aube de soufflante de turbomachine à deux plates-formes intégrées ;
- la figure 2 illustre de façon très schématique la disposition des couches de fils dans une ébauche fibreuse tissée 3D destinée à la réalisation d'une aube de soufflante telle que celle de la figure 1 ;
- la figure 3 est une vue schématique d'un plan de chaîne montrant un mode de tissage de l'ébauche fibreuse de la figure 2 ; et
- la figure 4 est une vue schématique d'un plan de chaîne montrant un autre mode de tissage pour la réalisation d'une ébauche fibreuse selon une variante de réalisation de l'invention.

### Description détaillée de l'invention

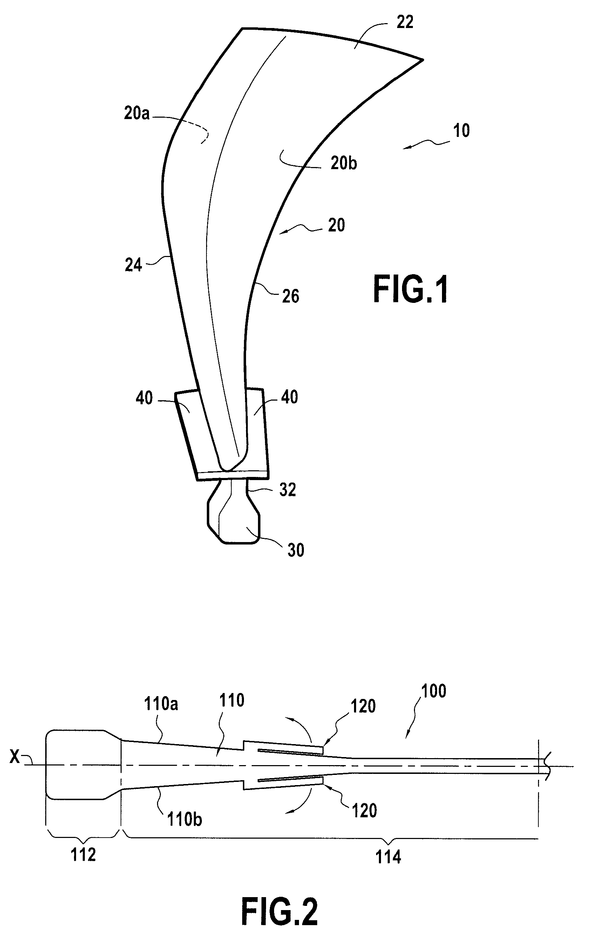

L'invention est applicable à la fabrication de toute aube de turbomachine à plate(s)-forme(s) intégrée(s) en matériau composite, et notamment mais non exclusivement aux aubes de soufflante telles que celle illustrée sur la figure 1.

L'aube 10 de la figure 1 comprend, de façon bien connue en soi, une pale 20, un pied 30 formé par une partie de plus forte épaisseur, par exemple à section en forme de bulbe, prolongé par une échasse 32, et deux plates-formes 40 situées entre l'échasse 32 et la pale 20.

La pale 20 s'étend en direction longitudinale entre les plates-formes 40 et le sommet de l'aube 22 et présente en section transversale un profil incurvé d'épaisseur variable entre ses deux bords latéraux opposés (i.e. son bord d'attaque 24 et son bord de fuite 26).

A son extrémité radiale interne, la pale 20 se raccorde aux plates-formes 40 sur une face externe de celles-ci qui délimitent, à l'intérieur, la veine annulaire d'entrée d'air dans la soufflante, cette veine étant délimitée du côté extérieur par un carter (non représenté).

Dans l'exemple de la figure 1, l'aube 10 présente ainsi deux plates-formes 40 qui s'étendent depuis les faces latérales (face intrados 20a et face extrados 20b) de la pale 20. Bien entendu, l'invention s'applique également aux aubes qui ne comportent qu'une seule plate-forme (qui s'étendrait par exemple depuis la face extrados de la pale, la face intrados étant quant à elle dépourvue de plate-forme).

La figure 2 montre la disposition des couches de fils dans une ébauche fibreuse 100 tissée 3D destinée à la réalisation d'une aube de soufflante telle que celle de la figure 1.

L'ébauche fibreuse 100 comprend une partie centrale 110 formant préforme de pale et de pied et deux parties latérales 120 destinées à former, après mise en forme, préformes de plate-forme. Ces parties 110 et 120 de l'ébauche s'étendent de façon générale dans la direction X correspondant à la direction longitudinale de l'aube à réaliser. Sur cette figure, seules les enveloppes de ces deux parties sont représentées.

La partie centrale 110 comprend deux faces latérales opposées 110a, 110b à partir desquelles s'étendent les deux parties latérales 120. Dans le cas de la réalisation d'une aube de soufflante à une seule plate-forme, seule l'une de ces parties latérales serait présente.

La partie centrale 110 présente, dans sa partie 112 destinée à former une préforme de pied, une surépaisseur (entre les faces latérales 110a, 110b) déterminée en fonction de l'épaisseur du pied de l'aube à réaliser. Dans sa partie 114 destinée à former une préforme de pale, la partie centrale 110 présente une épaisseur variable déterminée en fonction de l'épaisseur de profil de la pale de l'aube à réaliser.

Succinctement, une préforme fibreuse ayant une forme proche de celle de l'aube de soufflante à fabriquer peut être obtenue à partir d'une telle ébauche fibreuse 100 de la façon suivante. Après un contrôle qualité, l'ébauche fibreuse 100 est découpée à plat afin que toutes les sur-longueurs tissées soient éliminées et que la pièce soit aux dimensions du moule d'injection. Cette étape de découpe concerne en particulier la partie 112 de l'ébauche destinée à former une préforme de pied, la partie centrale 110 formant préforme de pale au niveau de son bord d'attaque, son bord de fuite et de son sommet, et l'extrémité des parties latérales 120 destinées à former préformes de plate-forme.

Une fois les découpes réalisées, la mise en forme de l'ébauche est réalisée en la mettant à plat et en relevant l'une des parties latérales pour la positionner à 90° par rapport à la face latérale correspondante de la partie centrale. Cette position est bloquée et la préforme retournée. La partie centrale de l'ébauche est ensuite déformée pour reproduire le profil incurvé de l'aube. Puis, l'autre partie latérale est déployée à 90° par rapport à la face latérale correspondante de la partie centrale. On obtient ainsi une préforme fibreuse en une seule pièce avec une partie formant préforme de pale et de pied et deux parties formant préformes de plate-forme. La préforme fibreuse ainsi obtenue est ensuite séchée et mise en place dans le moule d'injection.

Le dépôt de la matrice dans la préforme fibreuse est réalisée en maintenant la préforme dans le moule au moins jusqu'à rigidification (ou consolidation) de la préforme. La matrice est de nature choisie en fonction de l'application envisagée, par exemple une matrice organique obtenue notamment à partir d'une résine précurseur de matrice polymère telle qu'une résine époxyde, bismaléimide ou polyimide, ou une matrice en carbone ou une matrice en céramique. Dans le cas d'une matrice organique, la préforme fibreuse est imprégnée par une composition contenant la résine précurseur de matrice, avant conformation dans un outillage, ou après conformation, l'imprégnation étant dans ce dernier cas réalisée par exemple par infusion ou par un processus de type RTM ("Resin Transfer Moulding"). Dans le cas d'une matrice en carbone ou en céramique, la densification pourra être réalisée par infiltration chimique en phase gazeuse, ou CVI ("Chemical Vapor Infiltration") ou par imprégnation par une composition liquide contenant une résine précurseur de carbone ou de céramique et traitement thermique de pyrolyse ou céramisation du précurseur, ces procédés étant bien connus en soi.

Des modes de tissage tridimensionnel de l'ébauche fibreuse 100 seront maintenant décrits plus en détail.

Il est supposé que le tissage est réalisé avec des fils de chaîne s'étendant dans la direction longitudinale X de l'ébauche, étant noté qu'un tissage avec des fils de trame dans cette direction est également possible.

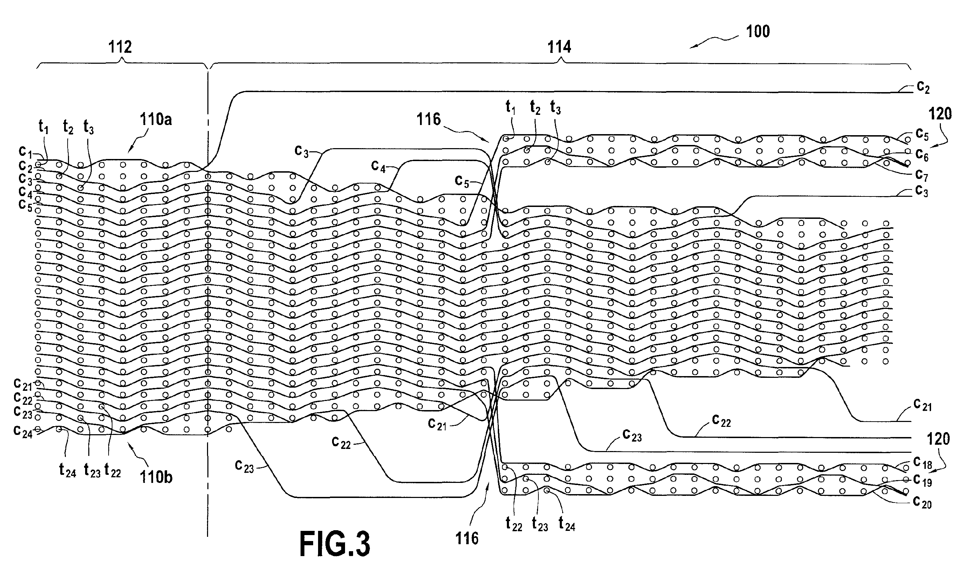

La figure 3 montre un plan de chaîne d'une ébauche fibreuse 100 tissée tridimensionnel destinée à la réalisation d'une préforme fibreuse telle que celle de la figure 2. Par plan de chaîne de l'ébauche fibreuse, on entend ici un plan perpendiculaire aux fils de trame contenant une colonne de fils de chaîne (sur cette figure 3, les traits continus représentent les fils de chaîne).

Au niveau de sa partie 112 destinée à former une préforme de pied, l'ébauche fibreuse comprend, entre ses faces latérales opposées 110a, 110b, par exemple 24 couches de fils de chaîne c₁ à c₂₄ et autant de couches de trame t₁ à t₂₄. Dans cette partie 112, l'armure de tissage est de type interlock avec un tissage de type satin pour les fils de chaîne c₁ et c₂₄ dans les parties adjacentes aux faces latérales opposées 110a, 110b. Un tissage 3D d'une structure fibreuse avec une armure de type interlock à coeur et une armure 2D ou 3D de type satin en peau est connu en soi. On pourra se référer au document WO 2006/136755.

Au niveau de la partie 114 destinée à former une préforme de pale, l'épaisseur de l'ébauche fibreuse entre ses faces latérales 110a, 110b est variable. Aussi, pour tenir compte de cet amincissement du profil de l'aube à fabriquer, on retire au fur et à mesure des couches de fils de chaîne et autant de fils de trame de l'ébauche fibreuse. Sur l'exemple de la figure 3, il s'agit des fils de chaîne c₂, c₃ et c₄ qui sont successivement retirées du côté de la face latérale 110a, et des fils de chaîne c₂₃, c₂₂ et c₂₁ qui sont successivement retirées du côté de la face latérale opposée 110b. Cette manipulation consistant à retirer des fils au cours du tissage de l'ébauche fibreuse est connue en soi. On pourra se référer au document EP 1,528,285.

Au niveau d'une zone 116 de la partie 114 de l'ébauche fibreuse sont tissées les parties latérales 120 destinées à former préformes de plate-forme. A cet effet, des couches de fils de chaîne sont retirées de l'ébauche fibreuse du côté de chaque face latérale et tissées avec certaines couches de fils de trame. Sur l'exemple de la figure 3, il s'agit ainsi des fils de chaîne adjacents c₅ à c₇ qui sont retirées du côté de la face latérale 110a et tissées avec fils de trame t₁ à t₃ pour former l'une des parties latérales 120. De même, les fils de chaîne adjacents c₁₈ à c₂₀ sont retirés du côté de l'autre face latérale 110b et tissées avec fils de trame t₂₂ à t₂₄ pour former l'autre des parties latérales 120. Des déliaisons sont ménagées entre les couches de fils de chaîne formant les parties 120 et les couches de fils de chaîne de la partie 114 destinée à former une préforme de pale.

Par ailleurs, pour maintenir un taux de fibres constant dans l'ébauche fibreuse malgré le retrait de ces fils de chaîne destinés à former les parties latérales 120, certains au moins des fils de chaîne retirés de l'ébauche fibreuse pour tenir compte de la dégressivité de l'épaisseur du profil de l'aube sont réintroduits dans la partie 114 de l'ébauche fibreuse au niveau de la zone 116 (ici les fils de chaîne c₃ et c₄ du côté de la face latérale 110a et c₂₁, c₂₂ et c₂₃ du côté de la face latérale 110b). Ainsi, ces fils de chaîne viennent croiser les fils de chaîne c₅ à c₇ (du côté de la face latérale 110a) et c₁₈ à c₂₀ (du côté de la face latérale 110b), de préférence au niveau des raccordements entre la partie 114 correspondant à la préforme de pale et les parties latérales 120 correspondant aux préformes de plate-forme.

De la sorte, les fils de chaîne c₃ et c₄ du côté de la face latérale 110a et c₂₁, c₂₂ et c₂₃ du côté de la face latérale 110b sont laissés flottés (c'est-à-dire qu'ils restent en surface de l'ébauche fibreuse sans être entrelacés avec les fils de trame) entre leur zone de sortie de la partie 114 de l'ébauche fibreuse et leur zone 116 de réintroduction dans celle-ci. Si la dégressivité de l'épaisseur du profil de pale le nécessite, certains au moins de ces fils de chaîne pourront être à nouveau sortis plus en aval de la partie 114 de l'ébauche fibreuse. Sur l'exemple de la figure 3, c'est le cas pour les fils de chaîne c₃, c₂₁, c₂₂ et c₂₃. Dans l'étape ultérieure de mise en forme de l'ébauche fibreuse, la portion de ces fils de chaîne c₃, c₂₁, c₂₂ et c₂₃ située entre leurs zones de sortie et d'insertion dans l'ébauche fibreuse est découpée.

La figure 3 représente un exemple de réalisation du croisement entre les fils de chaîne réintroduits dans la partie 114 de l'ébauche fibreuse au niveau de la zone 116 et les fils de chaîne sortis de celle-ci pour tisser les parties latérales 120 destinées à former préformes de plate-forme. Bien entendu, d'autres types connus de croisement pourront être utilisés, notamment de façon à éviter des croisements trop brutaux.

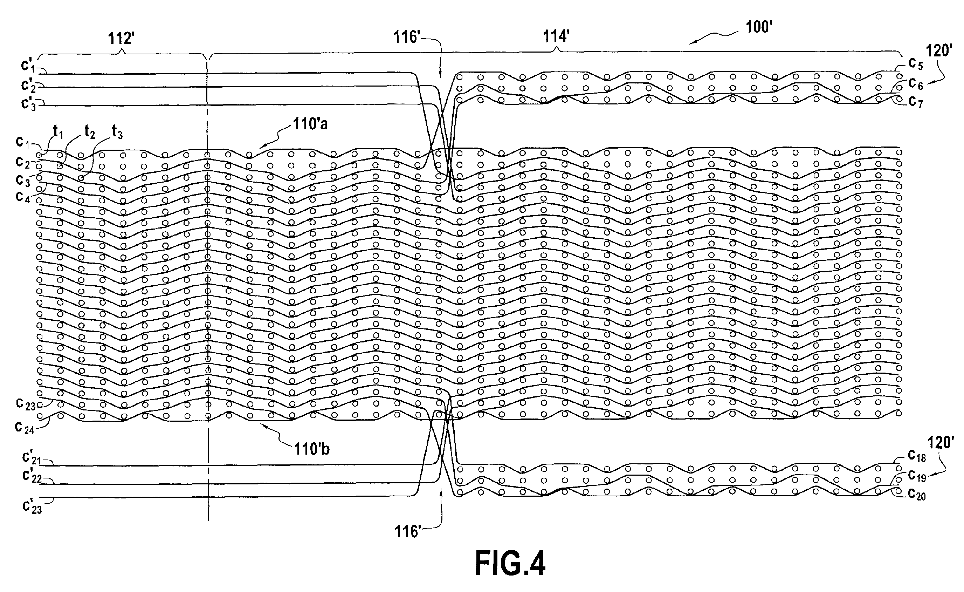

La figure 4 montre un plan de chaîne d'une ébauche fibreuse 100' destinée à la réalisation d'une préforme fibreuse d'aube de soufflante de turbomachine et réalisée selon un autre mode de tissage.

Dans cet autre exemple de réalisation, le profil de la pale de l'aube à fabriquer ne présente pas de dégressivité de son épaisseur au moins sur la partie basse de la pale qui s'étend au-delà des plates-formes (l'épaisseur reste constante).

Au niveau de sa partie 112' destinée à former une préforme de pied, l'ébauche fibreuse 100' comprend, entre ses faces latérales opposées 110'a, 110'b, 24 couches de fils de chaîne c₁ à c₂₄ et autant de couches de trame t₁ à t₂₄. Dans cette partie 112', l'armure de tissage est de type interlock avec un tissage de type satin pour les fils de chaîne c₁ et c₂₄ dans les parties adjacentes aux faces latérales opposées.

Au niveau de la partie 114' destinée à former une préforme de pale, l'épaisseur de l'ébauche fibreuse entre ses faces latérales 110'a, 110'b reste constante, de sorte qu'aucune sortie de couche de fils n'est réalisée.

Comme pour l'exemple précédemment décrit, au niveau d'une zone 116' de la partie 114' de l'ébauche fibreuse sont tissées les parties latérales 120' destinées à former préformes de plate-forme. A cet effet, sur l'exemple de la figure 4, les fils de chaîne adjacents c₅ à c₇ sont retirées du côté de la face latérale 110'a et tissées avec fils de trame t₁ à t₃ pour former l'une des parties latérales 120'. De même, les fils de chaîne adjacents c₁₈ à c₂₀ sont retirés du côté de l'autre face latérale 110'b et tissées avec fils de trame t₂₂ à t₂₄ pour former l'autre des parties latérales 120'.

Pour maintenir un taux de fibres constant dans l'ébauche fibreuse malgré le retrait de ces fils de chaîne destinés à former les parties latérales 120', des fils de chaîne c'₁ à c'₃ et c'₂₁ à et c'₂₃ rapportés sont introduits dans la partie 114' de l'ébauche fibreuse au niveau de la zone 116'. Ainsi, ces fils de chaîne viennent croiser les fils de chaîne c₅ à c₇ (du côté de la face latérale 110'a) et c₁₈ à c₂₀ (du côté de la face latérale 110'b), de préférence au niveau des raccordements entre la partie 114' correspondant à la préforme de pale et les parties latérales 120' correspondant aux préformes de plate-forme.

D'autres variantes de tissage de l'ébauche fibreuse selon l'invention peuvent être envisagées.

Notamment, dans le cas où l'aube à fabriquer ne présente qu'une seule plate-forme, la sortie de couches de fils pour tisser la préforme de celle-ci ne serait opérée que du côté de l'une des faces latérales de l'ébauche fibreuse. Cette solution permet d'avoir davantage de flexibilité si l'on ne dispose que de peu de couches de fils pour tisser cette préforme de plate-forme.

Il est également possible de réaliser une préforme fibreuse présentant des préformes de demi plate-forme s'étendant à partir de ses faces latérales. Dans ce cas, les demies plates-formes de l'aube fabriquée à partir d'une telle préforme ne couvrent pas entièrement l'espacement entre deux aubes adjacentes et il est nécessaire de réaliser indépendamment les demies plates-formes manquantes. La réalisation de ces dernières est toutefois relativement aisée puisque leur tissage n'a pas besoin de prendre en compte la cambrure de pale.

Selon une alternative de tissage de la figure 3, la variation de l'épaisseur de la pale de l'aube à fabriquer peut être obtenue en utilisant des fils de trame de titre variable. Cette alternative permet d'éviter d'avoir à faire sortir des couches de fils de l'ébauche fibreuse pour les réintroduire un peu plus en aval.

Selon une autre alternative de tissage de l'ébauche fibreuse, il est possible de dédoubler les fils de chaîne constitutifs de préformes de plate-forme et de les tisser côte à côte afin de faciliter leur sortie de l'ébauche fibreuse à l'emplacement précis du positionnement des plates-formes.

## Revendications

1. Procédé de réalisation d'une préforme fibreuse pour la fabrication d'une aube de turbomachine en matériau composite, l'aube (10) ayant une pale (20) s'étendant selon une direction longitudinale et présentant deux faces latérales opposées (24, 26) et au moins une plate-forme (40) s'étendant à partir d'une face latérale, le procédé comprenant :
la réalisation par tissage tridimensionnel d'une ébauche fibreuse (100 ; 100') en une seule pièce avec une pluralité de couches de fils longitudinaux (c₁ à c₂₄) s'étendant dans une direction correspondant à la direction longitudinale de l'aube à fabriquer et liées entre elles par des fils d'une pluralité de couches de fils transversaux (t₁ à t₂₄) ; et
la mise en forme de l'ébauche fibreuse pour obtenir une préforme fibreuse en une seule pièce ayant une première partie formant préforme de pale et au moins une seconde partie formant préforme de plate-forme ;
**caractérisé en ce que**, au cours du tissage de l'ébauche fibreuse, des fils (c₅ à c₇, c₁₈ à c₂₀) d'un premier groupe de fils longitudinaux sont sortis de l'ébauche fibreuse du côté de l'une au moins des faces latérales (110a, 110b) de l'ébauche fibreuse pour former une partie (120) de l'ébauche correspondant à une préforme de plate-forme d'aube, et des fils (c₃, c₄, c₂₁, c₂₂ et c₂₃ ; c'₁ à c'₃) d'un deuxième groupe de fils longitudinaux sont insérés dans l'ébauche fibreuse avec un croisement mutuel entre les fils du premier groupe et les fils du deuxième groupe.

2. Procédé selon la revendication 1, dans lequel le croisement entre les fils du premier groupe et les fils du deuxième groupe est effectué à proximité d'un raccordement entre la partie de l'ébauche correspondant à la préforme de plate-forme d'aube et la partie de l'ébauche correspondant à la préforme de pale.

3. Procédé selon l'une des revendications 1 et 2, dans lequel les fils du deuxième groupe de fils qui sont insérés dans l'ébauche fibreuse proviennent de couches de fils longitudinaux préalablement sorties de l'ébauche fibreuse afin d'obtenir une réduction de l'épaisseur de l'ébauche sur sa largeur.

4. Procédé selon la revendication 3, dans lequel la mise en forme de l'ébauche fibreuse comprend la découpe de la portion des fils du deuxième groupe de fils située entre les zones de sortie et d'insertion dans l'ébauche fibreuse.

5. Procédé selon l'une des revendications 3 et 4, dans lequel certains au moins des fils du deuxième groupe de fils sont sortis de l'ébauche fibreuse en aval de leur zone d'insertion dans ladite ébauche fibreuse afin d'obtenir une réduction de l'épaisseur de l'ébauche sur sa largeur en aval de la partie de l'ébauche correspondant à la préforme de plate-forme d'aube.

6. Procédé selon l'une des revendications 1 et 2, dans lequel dans lequel certains au moins des fils du deuxième groupe de fils qui sont insérés dans l'ébauche fibreuse proviennent de couches de fils longitudinaux rapportées.

7. Procédé selon l'une quelconque des revendications 1 à 6, dans lequel la sortie et l'insertion de fils dans l'ébauche fibreuse est réalisée pour chacune des faces latérales de l'ébauche fibreuse pour former une partie de l'ébauche correspondant à deux préformes de plate-forme d'aube.

8. Procédé selon l'une quelconque des revendications 1 à 7, dans lequel la mise en forme de l'ébauche fibreuse comprend la découpe de la partie de l'ébauche correspondant à la préforme de plate-forme d'aube aux dimensions voulues et le déploiement de cette partie de l'ébauche selon une direction sensiblement orthogonale à sa face latérale.

9. Procédé selon l'une quelconque des revendications 1 à 8, dans lequel les fils longitudinaux s'étendant dans une direction correspondant à la direction longitudinale de l'aube à fabriquer sont des fils de chaîne.

10. Procédé selon l'une quelconque des revendications 1 à 8, dans lequel les fils longitudinaux s'étendant dans une direction correspondant à la direction longitudinale de l'aube à fabriquer sont des fils de trame.

11. Préforme fibreuse d'une aube (10) de turbomachine ayant une pale (20) s'étendant selon une direction longitudinale et présentant deux faces latérales opposées (24, 26) et au moins une plate-forme (40) s'étendant à partir d'une face latérale, la préforme comprenant une ébauche fibreuse (100 ; 100') tissée en une seule pièce par tissage tridimensionnel avec une pluralité de couches de fils longitudinaux (c₁ à c₂₄) s'étendant dans une direction correspondant à la direction longitudinale de l'aube à fabriquer et liées entre elles par des fils d'une pluralité de couches de fils transversaux (t₁ à t₂₄), **caractérisée en ce que** des fils (c₅ à c₇, c₁₈ à c₂₀) d'un premier groupe de fils longitudinaux sont sortis de l'ébauche fibreuse du côté de l'une au moins des faces latérales (110a, 110b) de l'ébauche fibreuse pour former une partie (120) de l'ébauche correspondant à une préforme de plate-forme d'aube, et des fils (c₃, c₄, c₂₁, c₂₂ et c₂₃ ; c'₁ à c'₃) d'un deuxième groupe de fils longitudinaux sont insérés dans l'ébauche fibreuse avec un croisement mutuel entre les fils du premier groupe et les fils du deuxième groupe.

12. Préforme selon la revendication 11, dans laquelle le croisement entre les fils du premier groupe et les fils du deuxième groupe se situe à proximité d'un raccordement entre la partie de l'ébauche correspondant à la préforme de plate-forme d'aube et la partie de l'ébauche correspondant à la préforme de pale.

13. Préforme selon l'une des revendications 11 et 12, dans laquelle la sortie et l'insertion de fils dans l'ébauche fibreuse est réalisée pour chacune des faces latérales de l'ébauche fibreuse pour former une partie de l'ébauche correspondant à deux préformes de plate-forme d'aube.

14. Aube de soufflante de turbomachine en matériau composite comprenant une préforme fibreuse selon l'une quelconque des revendications 11 à 13 densifiée par une matrice.

15. Soufflante de turbomachine comprenant au moins une aube selon la revendication 14.

## Patentansprüche

1. Verfahren zur Herstellung eines Faservorformlings für die Fertigung einer Turbomaschinenschaufel aus Verbundwerkstoff, wobei die Schaufel (10) ein Blatt (20), das sich in einer Längsrichtung erstreckt und zwei gegenüberliegende Seitenflächen (24, 26) aufweist, sowie wenigstens eine Plattform (40), die sich von einer Seitenfläche aus erstreckt, aufweist, wobei das Verfahren umfasst:
das Herstellen, durch dreidimensionales Weben, eines einstückigen Faserrohlings (100; 100') mit einer Vielzahl von Lagen aus Längsfäden (c₁ bis c₂₄), die sich in einer der Längsrichtung der herzustellenden Schaufel entsprechenden Richtung erstrecken und die durch Fäden einer Vielzahl von Lagen aus Querfäden (t₁ bis t₂₄) untereinander verbunden sind, und
das Informbringen des Faserrohlings, um einen einstückigen Faservorformling mit einem einen Blattvorformling bildenden ersten Teil und wenigstens einem einen Plattformvorformling bildenden zweiten Teil zu erhalten,
**dadurch gekennzeichnet, dass** im Laufe des Webens des Faserrohlings Fäden (c₅ bis c₇, c₁₈ bis c₂₀) einer ersten Gruppe von Längsfäden auf der Seite von wenigstens einer der Seitenflächen (110a, 110b) des Faserrohlings aus dem Faserrohling herausgenommen werden, um einen Teil (120) des Rohlings, welcher einem Schaufelplattformvorformling entspricht, zu bilden, und Fäden (c₃, c₄, c₂₁, c₂₂ und c₂₃; c'₁ bis c'₃) einer zweiten Gruppe von Längsfäden mit einem gegenseitigen Kreuzen zwischen den Fäden der ersten Gruppe und den Fäden der zweiten Gruppe in den Faserrohling eingefügt werden.

2. Verfahren nach Anspruch 1, bei dem das Kreuzen zwischen den Fäden der ersten Gruppe und den Fäden der zweiten Gruppe in der Nähe einer Verbindung zwischen dem Teil des Rohlings, der dem Schaufelplattformvorformling entspricht, und dem Teil des Rohlings, der dem Blattvorformling entspricht, vollzogen wird.

3. Verfahren nach einem der Ansprüche 1 und 2, bei dem die Fäden der zweiten Fadengruppe, die in den Faserrohling eingefügt werden, aus zuvor aus dem Faserrohling entnommenen Längsfadenlagen stammen, um eine Verringerung der Dicke des Rohlings über dessen Breite zu erreichen.

4. Verfahren nach Anspruch 3, bei dem das Informbringen des Faserrohlings das Ausschneiden des Abschnitts der Fäden der zweiten Fadengruppe, welcher zwischen den Entnahme- und Einfügungsbereichen in dem Faserrohling gelegen ist, umfasst.

5. Verfahren nach einem der Ansprüche 3 und 4, bei dem wenigstens einige der Fäden der zweiten Fadengruppe nach ihrem Bereich des Einfügens in den Faserrohling aus dem Faserrohling entnommen werden, um eine Verringerung der Dicke des Rohlings über dessen Breite nach dem dem Schaufelplattformvorformling entsprechenden Teil des Rohlings zu erreichen.

6. Verfahren nach einem der Ansprüche 1 und 2, bei dem wenigstens einige der Fäden der zweiten Fadengruppe, die in den Faserrohling eingefügt werden, aus angesetzten Längsfadenlagen stammen.

7. Verfahren nach einem der Ansprüche 1 bis 6, bei dem die Entnahme und das Einfügen von Fäden in den Faserrohling für eine jede der Seitenflächen des Faserrohlings vollzogen wird, um einen zwei Schaufelplattformvorformlingen entsprechenden Teil des Rohlings zu bilden.

8. Verfahren nach einem der Ansprüche 1 bis 7, bei dem das Informbringen des Faserrohlings das Zuschneiden des Teils des Rohlings, der dem Schaufelplattformvorformling entspricht, auf die gewünschten Abmessungen sowie das Entfalten dieses Teils des Rohlings in einer zu seiner Seitenfläche im Wesentlichen orthogonalen Richtung umfasst.

9. Verfahren nach einem der Ansprüche 1 bis 8, bei dem die Längsfäden, die sich in einer der Längsrichtung der herzustellenden Schaufel entsprechenden Richtung erstrecken, Kettfäden sind.

10. Verfahren nach einem der Ansprüche 1 bis 8, bei dem die Längsfäden, die sich in einer der Längsrichtung der herzustellenden Schaufel entsprechenden Richtung erstrecken, Schussfäden sind.

11. Faservorformling einer Schaufel (10) einer Turbomaschine, mit einem Blatt (20), das sich in einer Längsrichtung erstreckt und zwei gegenüberliegende Seitenflächen (24, 26) aufweist, sowie wenigstens einer Plattform (40), die sich von einer Seitenfläche aus erstreckt, wobei der Vorformling einen durch dreidimensionales Weben einstückig gewebten Faserrohling (100; 100') mit einer Vielzahl von Lagen aus Längsfäden (c₁ bis c₂₄), die sich in einer der Längsrichtung der herzustellenden Schaufel entsprechenden Richtung erstrecken und die durch Fäden einer Vielzahl von Lagen aus Querfäden (t₁ bis t₂₄) untereinander verbunden sind, umfasst, **dadurch gekennzeichnet, dass** Fäden (c₅ bis c₇, c₁₈ bis c₂₀) einer ersten Gruppe von Längsfäden auf der Seite von wenigstens einer der Seitenflächen (110a, 110b) des Faserrohlings aus dem Faserrohling herausgenommen sind, um einen Teil (120) des Rohlings, welcher einem Schaufelplattformvorformling entspricht, zu bilden, und Fäden (c₃, c₄, c₂₁, c₂₂ und c₂₃; c'₁ bis c'₃) einer zweiten Gruppe von Längsfäden mit einem gegenseitigen Kreuzen zwischen den Fäden der ersten Gruppe und den Fäden der zweiten Gruppe in den Faserrohling eingefügt sind.

12. Vorformling nach Anspruch 11, bei dem die Kreuzung zwischen den Fäden der ersten Gruppe und den Fäden der zweiten Gruppe in der Nähe einer Verbindung zwischen dem Teil des Rohlings, der dem Schaufelplattformvorformling entspricht, und dem Teil des Rohlings, der dem Blattvorformling entspricht, gelegen ist.

13. Vorformling nach einem der Ansprüche 11 und 12, bei dem die Entnahme und das Einfügen von Fäden in den Faserrohling für eine jede der Seitenflächen des Faserrohlings vollzogen wird, um einen zwei Schaufelplattformvorformlingen entsprechenden Teil des Rohlings zu bilden.

14. Turbomaschinengebläseschaufel aus Verbundwerkstoff, die einen durch eine Matrix verdichteten Faservorformling nach einem der Ansprüche 11 bis 13 umfasst.

15. Turbomaschinengebläse, das wenigstens eine Schaufel nach Anspruch 14 umfasst.

## Claims

1. A method of making a fiber preform for fabricating a turbine engine blade out of composite material, the blade (10) having an airfoil (20) extending in a longitudinal direction and presenting two opposite side faces (24, 26) and at least one platform (40) extending from a side face, the method comprising:
making a single-piece fiber blank (100 ; 100') by three-dimensional weaving with a plurality of longitudinal yarns (C₁ to C₂₄) extending in a direction corresponding to the longitudinal direction of the blade that is to be fabricated and interlinked by yarns of a plurality of transverse layers of yarns (t₁ to t₂₄);
shaping the fiber blank to obtain a single-piece fiber preform having a first portion forming an airfoil preform and at least one second portion forming a platform preform;
**characterized in that**, during the weaving of the fiber blank, yarns (c₅ to c₇, c₁₈ to c₂₀) of a first group of longitudinal yarns are extracted from the fiber blank beside at least one of the side faces (110a, 110b) of the fiber blank in order to form a portion (120) of the blank corresponding to a blade platform preform, and yarns (c₃, c₄, c₂₁, c₂₂ and c₂₃ ; c'₁ to c'₃) of a second group of longitudinal yarns are inserted into the fiber blank with mutual crossing between the yarns of the first group and the yarns of the second group.

2. A method according to claim 1, wherein the crossing between the yarns of the first group and the yarns of the second group takes place close to a connection between the portion of the blank corresponding to the blade platform preform and the portion of the blank corresponding to the airfoil preform.

3. A method according to claim 1 or claim 2, wherein the yarns of the second group of yarns that are inserted into the fiber blank come from layers of longitudinal yarn previously extracted from the fiber blank in order to obtain a reduction in the thickness of the blank over its width.

4. A method according to claim 3, wherein the shaping of the fiber blank includes cutting away the portions of the yarns of the second group of yarns that are situated between the zones where they are extracted from and inserted into the fiber blank.

5. A method according to claim 3 or claim 4, wherein at least some of the yarns of the second group of yarns are extracted from the fiber blank downstream from the zone where they are inserted into said fiber blank in order to reduce the thickness of the blank over its width downstream from the portion of the blank that corresponds to the blade platform preform.

6. A method according to claim 1 or claim 2, wherein at least some of the yarns of the second group of yarns that are inserted into the fiber blank come from additional layers of longitudinal yarns.

7. A method according to any one of claims 1 to 6, wherein the yarns are extracted from and inserted into the fiber blank on each of the side faces of the fiber blank in order to form portions of the blank that correspond to two blade platform preforms.

8. A method according to any one of claims 1 to 7, wherein the shaping of the fiber blank includes cutting the portion of the blank that corresponds to the blade platform preform to have the desired dimensions, and deploying said portion of the blank in a direction that is substantially orthogonal to its side face.

9. A method according to any one of claims 1 to 8, wherein the longitudinal yarns extending in a direction corresponding to the longitudinal direction of the blade that is to be fabricated are warp yarns.

10. A method according to any one of claims 1 to 8, wherein the longitudinal yarns extending in a direction corresponding to the longitudinal direction of the blade that is to be fabricated are weft yarns.

11. A fiber preform for a turbine engine blade (10) having an airfoil (20) extending in a longitudinal direction and presenting two opposite side faces (24, 26) together with at least one platform (40) extending from a side face, the preform comprising a fiber blank (100, 100') woven as a single piece by three-dimensional weaving with a plurality of layers of longitudinal yarns (c₁ to c₂₄) extending in a direction corresponding to the longitudinal direction of the blade that is to be fabricated and interlinked by yarns of a plurality of layers of transverse yarns (t₁ to t₂₄), **characterized in that** yarns (c₅ to c₇, c₁₈ to c₂₀) of a first group of longitudinal yarns are extracted from the fiber blank beside at least one of the side faces (110a, 110b) of the fiber blank in order to form a portion (120) of the blank corresponding to a blade platform preform, and yarns (c₃, c₄, c₂₁, c₂₂ and c₂₃ ; c'₁ to c'₃) of a second group of longitudinal yarns are inserted into the fiber blank, with mutual crossing between the yarns of the first group and the yarns of the second group.

12. A preform according to claim 11, wherein the crossing between the yarns of the first group and the yarns of the second group takes place close to a connection between the portion of the blank that corresponds to a blade platform preform and the portion of the blank that corresponds to the airfoil preform.

13. A preform according to claim 11 or claim 12, wherein yarns are extracted from and inserted into the fiber blank on each of the side faces of the fiber blank in order to form portions of the blank that correspond to two blade platform preforms.

14. A turbine engine fan blade made of composite material and including a fiber preform according to any one of claims 11 to 13 densified by a matrix.

15. A turbine engine fan including at least one blade according to claim 14.
